# EUROPÄISCHE PATENTSCHRIFT

(11) **EP 2 628 662 B1**
(45) Veröffentlichungstag und Bekanntmachung des Hinweises auf die Patenterteilung: **21.01.2015**
(21) Anmeldenummer: 13154380.3
(22) Anmeldetag: 07.02.2013
(51) Int. Cl.: B62D 15/02, B60Q 9/00, G01S 15/93, G01S 15/52, G01S 17/93, G01S 13/93

(54) **Verfahren für ein Assistenzsystem eines Fahrzeugs**
Method for an assistance system of a vehicle
Procédé pour un système d'assistance d'un véhicule

(30) Priorität: 17.02.2012 DE 102012202481
(43) Veröffentlichungstag der Anmeldung: 21.08.2013
(73) Patentinhaber: ROBERT BOSCH GMBH, 70442 Stuttgart (DE)
(72) Erfinder: Schoenherr, Michael, 71272 Renningen-Malmsheim (DE); Suessenbach, Frank, 71229 Leonberg (DE)

(56) Entgegenhaltungen:
- EP-A2- 1 947 476
- WO-A1-2005/118339
- DE-A1-102009 029 456
- DE-A1-102010 001 258
- US-A1- 2011 043 380

## Beschreibung

Die Erfindung geht aus von einem Verfahren für ein Assistenzsystem eines Fahrzeugs, wobei während eines Einparkvorgangs ein seitlicher Bereich des Fahrzeugs auf weitere Fahrzeuge überwacht wird und bei einer möglichen zukünftigen Kollision des weiteren Fahrzeugs mit dem Fahrzeug der Einparkvorgang angepasst wird.

### Stand der Technik

Aus der DE 10 2007 002 738 A1 ist ein Verfahren zur Unterstützung eines Einparkvorgangs eines Fahrzeugs bekannt, bei dem mit Ultraschallsensoren die Umgebung des Fahrzeugs überwacht wird. Bei der Überwachung wird unterschieden in ruhende und sich bewegende Objekte. Diese Unterscheidung wird dazu genutzt, den fließenden Verkehr auszublenden, damit das Fahrassistenzsystem keine falschen Rückschlüsse auf den für den Einparkvorgang zur Verfügung stehenden Raum ziehen kann. Dem Fahrer des Kraftfahrzeugs obliegt daher die Überwachung des fließenden Verkehrs.

Die DE 10 2010 001 258 A1 offenbart ein Fahrassistenzverfahren, bei dem mit seitlich am Fahrzeug angebrachten Sensoren Objekte erfasst werden, die sich relativ zum Fahrzeug bewegen. Durch die Verwendung von zwei in einem Abstand voneinander angebrachten Sensoren wird anhand der Reihenfolge detektierter Signale erkannt, ob es sich um ein entgegenkommendes oder ein überholendes Objekt handelt. Das Verfahren kann gemäß der Offenbarung beispielsweise in Kombination mit einem Einparkassistenzverfahren genutzt werden.

Der nächstliegende Stand der Technik ist der DE 10 2009 029 456 A1 zu sehen.

### Offenbarung der Erfindung

### Vorteile der Erfindung

Die erfindungsgemäße Vorgehensweise mit den kennzeichnenden Merkmalen der unabhängigen Ansprüche weist demgegenüber den Vorteil auf, dass während eines Einparkvorgangs eines Fahrzeugs mittels eines Assistenzsystems zukünftige mögliche Kollisionen mit weiteren Fahrzeugen erkannt werden und der Einparkvorgang selbständig angepasst wird.

Weitere vorteilhafte Ausführungsformen der vorliegenden Erfindung sind Gegenstand der Unteransprüche.

Bei herkömmlichen Assistenzsystemen wird während eines manuellen, halbautomatischen oder automatischen Einparkvorgangs eines Fahrzeugs überholender Verkehr nicht berücksichtigt. Es liegt in der Fahrerverantwortung diesen Verkehr zu berücksichtigen und den Einparkvorgang anzupassen, beispielsweise durch Abbremsen des Fahrzeugs. Daher kommt es vor allem bei Einparkvorgängen an viel befahrenen Straßen zu kritischen Fahrsituationen.

Vorteilhafterweise werden bei dem erfindungsgemäßen Verfahren mittels erster Sensoren Objekte im Umfeld des Fahrzeugs detektiert und mittels zweiter Sensoren weitere Fahrzeuge im seitlichen Bereich eines Fahrzeugs erkannt. Wird ein weiteres Fahrzeug erkannt, kann eine Warnung an den Fahrer des Fahrzeugs ausgegeben werden oder Erfindungsgemäß der Einparkvorgang selbständig angepasst werden, beispielsweise durch Verzögern des Einparkvorgangs und/oder durch Berechnung einer korrigierten Trajektorie.

Die Warnung an den Fahrer erfolgt vorteilhafterweise akustisch, optisch, haptisch und/oder in Form einer Mischung aus diesen. Beispielsweise wird die Bremse selbständig durch ein Steuergerät des Fahrzeugs mehrfach kurz betätigt und/oder der Fahrer durch eine multimediale Einrichtung gewarnt. So kann der Fahrer bei einem halbautomatischen Einparkvorgang den Einparkvorgang selbständig verzögern, beispielsweise durch Abbremsen des Fahrzeugs. Bei einem vollautomatischen Einparkvorgang wird der Einparkvorgang durch das Steuergerät verzögert und/oder eine korrigierte Trajektorie berechnet.

Erfindungsgemäß wird eine positionsabhängige Speicherung der korrigierten Trajektorie durchgeführt, wobei bei erneuten Einparkvorgängen des Fahrzeugs im Umfeld einer gespeicherten Position eine Trajektorie durch das Steuergerät berechnet wird, wobei eine evtl. bei früheren Einparkvorgängen bereits an dieser Position berechnete korrigierte Trajektorie mit einem geringeren Ausschwenken des Fahrzeugs berücksichtigt wird. Hierdurch wird vorteilhafterweise auf beispielsweise viel befahrenen Straßen eine Verringerung einer Dauer eines Einparkvorgangs erreicht, da während des Einparkvorgangs weniger oft und/oder weniger stark das Fahrzeug abgebremst werden muss um den Einparkvorgang zu verzögern. Vorteilhafterweise wird auch ein Abrieb der Bremsen und Reifen des Fahrzeugs verringert.

Der erste Sensor umfasst mindestens einen Ultraschallsensor. In einer weiteren vorteilhaften Ausführungsform kann ein Radar-, Infrarot-, LIDAR- und/oder ein kapazitiver Sensor und/oder eine Umfeldkamera mit einer höheren Messgenauigkeit eingesetzt werden.

Der zweite Sensor umfasst mindestens einen Radarsensor. In einer weiteren vorteilhaften Ausführungsform kann ein Ultraschall-, Infrarot-, LIDAR- und/oder ein kapazitiver Sensor und/oder eine Umfeldkamera mit einer höheren Messgenauigkeit eingesetzt werden.

In einer alternativen Ausführungsform bildet der erste Sensor und der zweite Sensor vorteilhafterweise eine bauliche Einheit. Hierdurch kann eine Robustheit der Sensoren erhöht werden, beispielsweise durch Verwendung von nur einer Signalleitung und/oder einer vorteilhaften Einbauposition aufgrund einer Größe der baulichen Einheit. Eine Gewichtreduzierung kann beispielsweise durch Einsparung eines Gehäuseteils für einen von beiden Sensoren erreicht werden.

Vorteilhafterweise ist der zweite Sensor in und/oder unter einem Frontstoßfänger, Heckstoßfänger des Fahrzeugs, in und/oder an einem Außenspiegel des Fahrzeugs, in und/oder an einer Befestigungsvorrichtung eines Außenspiegels des Fahrzeugs angebracht.

Das Verfahren zur Erkennung von Objekten im Umfeld des Fahrzeugs kann durchgeführt werden, wenn beispielsweise das Fahrzeug fährt, ohne dass das Fahrzeug vollständig stillstehen muss. Hierdurch entstehen keine weiteren Verzögerungen während eines halbautomatischen und/oder automatischen Einparkvorgangs.

Vorteilhafterweise werden als weitere Fahrzeuge bewegte Objekte erkannt, wie beispielsweise überholende Kraftfahrzeuge, Fahrräder, Motorräder und/oder Motorroller.

Das Verfahren zur Erkennung von Objekten im Umfeld des Fahrzeugs erkennt vorteilhafterweise weitere Fahrzeuge sowohl auf der Fahrerseite, als auch auf der Beifahrerseite, beispielsweise um Kollisionen des Fahrzeugs mit weiteren Fahrzeugen bei Einparkvorgängen in mehrspurigen Einbahnstraßen zu verhindern.

In einer weiteren vorteilhaften Ausführungsform kann das Verfahren zur Erkennung von Objekten im Umfeld des Fahrzeugs auf einen seitlichen Bereich des Fahrzeugs eingeschränkt werden. So werden vorteilhafterweise bei Rechtsverkehr bzw. Linksverkehr nur bewegte Objekte auf der Fahrerseite des Fahrzeugs, beispielsweise eines Linkslenkers bzw. eines Rechtslenkers erkannt.

### Kurzbeschreibung der Figuren

Ausführungsbeispiele der Erfindung sind in der Zeichnung dargestellt und in der nachfolgenden Beschreibung näher erläutert.

Es zeigt:
- Figur 1: eine Ausführungsform einer Vorrichtung geeignet zur Ausführung des erfindungsgemäßen Verfahrens.
- Figur 2: ein Beispiel für eine Fahrsituation mit einem möglichen Einparkvorgang nach dem Stand der Technik;
- Figur 3: ein Beispiel für eine Fahrsituation mit einer möglichen Kollision während eines Einparkvorgangs nach dem Stand der Technik;
- Figur 4: eine schematische Darstellung des erfindungsgemäßen Verfahrens anhand einer Fahrsituation mit zwei Fahrzeugen; und
- Figur 5: ein Flussdiagramm einer Ausführungsform des erfindungsgemäßen Verfahrens.

### Detaillierte Beschreibung der Ausführungsbeispiele

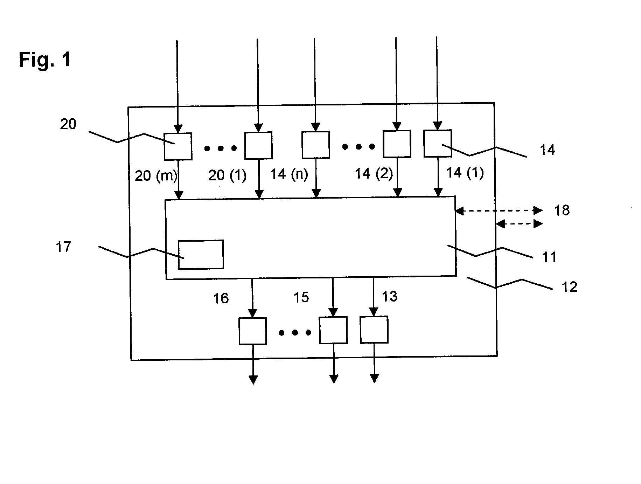

Figur 1 zeigt eine Ausführungsform einer Vorrichtung, die zur Ausführung des erfindungsgemäßen Verfahrens geeignet ist. Ein Fahrzeug 12 umfasst mindestens ein Steuergerät 11. Dem Steuergerät 11 werden von mindestens einem ersten Sensor 14 und einem zweiten Sensor 20 Daten zur Verfügung gestellt. Es können weitere erste bzw. zweite Sensoren 14 (1), 14 (2), ... 14 (n), 20 (1), ..., 20(m) vorhanden sein. Die Sensordaten können dem Steuergerät 11 direkt über eine Schnittstelle übermittelt werden oder alternativ über ein Bussystem wie beispielsweise einem CAN-Bus. Das Steuergerät enthält mindestens einen Speicher 17 zur Speicherung und Verarbeitung der Sensordaten, der kinematischen Betriebsdaten und der Fahrzeugdaten. Das Steuergerät 11 steuert mindestens einen Aktor 13, beispielsweise ein Einspritzsystem des Fahrzeugs 12 an. Weitere Aktoren 13 (1), 13 (2), ... 13 (m), 15, 17 können beispielsweise eine Servolenkung oder eine Bremse des Fahrzeugs 12 sein. Das Fahrzeug 12 bzw. das Steuergerät 11 kann auch weitere Schnittstellen 18 aufweisen, beispielsweise für die Interaktion mit einem Fahrer in Form von Abfragen und Hinweisen.

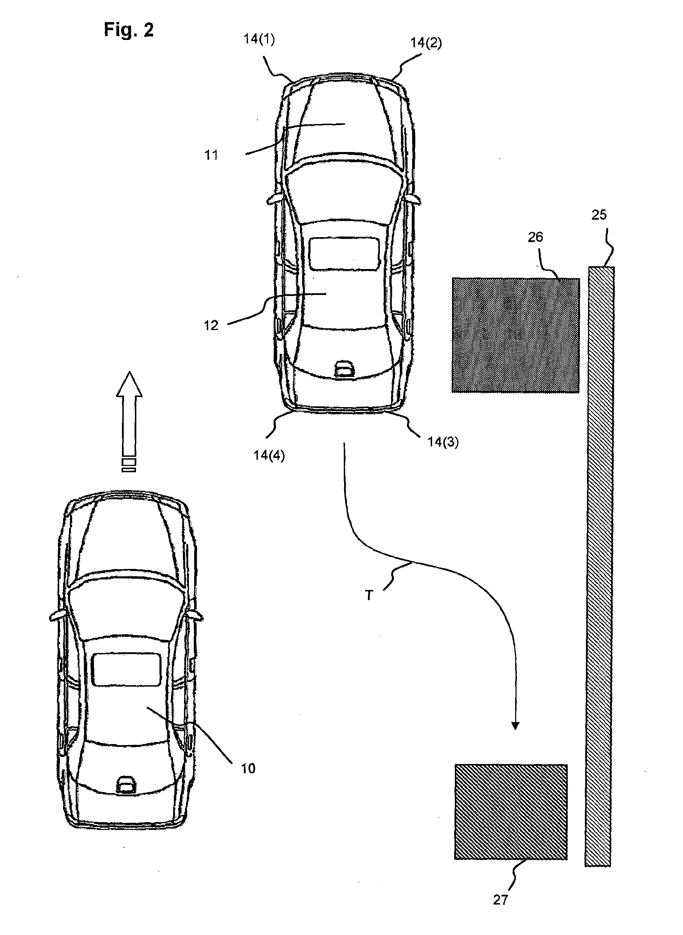

Figur 2 zeigt ein Beispiel für eine Fahrsituation mit einem möglichen Einparkvorgang nach dem Stand der Technik. Das Fahrzeug 12 umfasst in dem Beispiel vier Sensoren 14(1) bis 14(4) und ein Steuergerät 11, wobei in anderen Ausführungsformen weitere Sensoren vorhanden sein können, beispielsweise acht Sensoren. Mittels der vier Sensoren 14(1) bis 14(4) können Objekte im Umfeld des Fahrzeugs detektiert werden. Das Beispiel zeigt weiterhin eine Objektkonfiguration mit zwei Objekten 26, 27 und einer seitlichen Begrenzung 25 einer Parklücke, beispielsweise einem Bordstein. Während ein Fahrer das Fahrzeug 12 benutzt, werden die Objekte 26, 27 detektiert, wobei eine Lücke zwischen den Objekten 26, 27 als parkbare Lücke durch das Steuergerät 11 erkannt wird und wobei ein Hinweis an Insassen des Fahrzeugs ergeht und/oder das Steuergerät 11 eine mögliche Trajektorie T für einen Einparkvorgang berechnet. Ein Fahrer des Fahrzeugs 12 kann einen Einparkvorgang anhand der berechneten Trajektorie T starten, wobei eine Überwachung von fließendem Verkehr in seiner Verantwortung liegt, beispielsweise bei einer Erkennung eines weiteren Fahrzeugs 10 das sich von hinten links dem Fahrzeug 12 nähert.

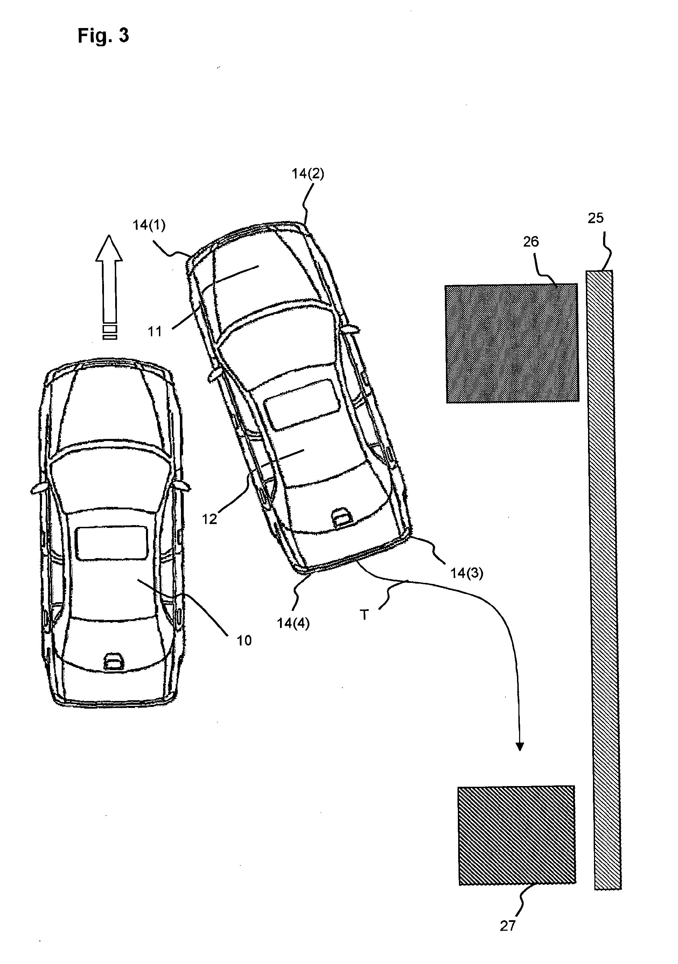

Figur 3 zeigt ein Beispiel für eine Fahrsituation während eines Einparkvorgangs nach dem Stand der Technik. Wird das Fahrzeug 12 anhand einer von dem Steuergerät 11 unter Einbeziehung von Sensordaten der mindestens vier Sensoren 14(1) bis 14(4) berechneten Trajektorie T zwischen zwei Objekte 26, 27 entlang eines Bordsteins 25 eingeparkt, kann der Einparkvorgang zu einer möglichen zukünftigen Fahrsituation in Form einer Kollision mit einem Fahrzeug 10 führen. Ein Fahrer des Fahrzeugs 12 muss rechtzeitig auf die veränderte Fahrsituation reagieren, beispielsweise durch Abbruch des Einparkvorgangs.

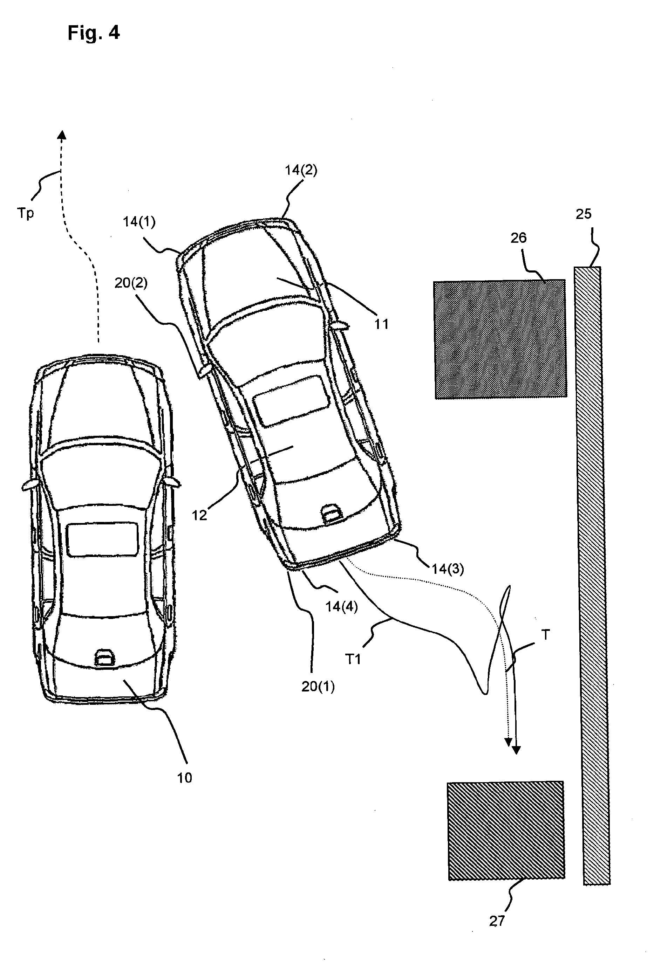

Figur 4 zeigt eine schematische Darstellung des erfindungsgemäßen Verfahrens anhand einer Fahrsituation mit zwei Fahrzeugen. Das Fahrzeug 12 umfasst wie in Figur 2 und 3 mindestens vier erste Sensoren 14(1) bis 14(4) und ein Steuergerät 11. Des Weiteren umfasst das Fahrzeug mindestens einen zweiten Sensor 20, beispielsweise in einem Außenspiegel 20(2) und/oder einer Heckstoßfänger 20(1) des Fahrzeugs 12. Durch den zweiten Sensor 20 wird ein seitlicher Bereich des Fahrzeugs 12 auf ein weiteres Fahrzeug 10 überwacht. Wird ein weiteres Fahrzeug 10 durch den Sensor 20 erkannt, berechnet das Steuergerät 11 des Fahrzeugs 12 eine prognostizierte Trajektorie Tp des weiteren Fahrzeugs 10. Das weitere Fahrzeug ist beispielsweise ein überholendes Kraftfahrzeug.

Durch einen Vergleich der Trajektorie T mit der prognostizierten Trajektorie Tp erkennt das Steuergerät 11 eine mögliche zukünftige Kollision des weiteren Fahrzeugs 10 mit dem Fahrzeug 12. Für den Vergleich der Trajektorie T und der prognostizierten Trajektorie Tp zur Erkennung der möglichen zukünftigen Kollision wird eine Schnittpunktprüfung der Trajektorien durchgeführt. Bei Erkennung einer zukünftigen möglichen Kollision wird der Einparkvorgang des Fahrzeugs 12 entlang der Trajektorie T so lange und/oder stark verzögert, bis eine zukünftige mögliche Kollision des Fahrzeugs 12 mit dem Fahrzeug 10 durch das Steuergerät 11 ausgeschlossen wird. In diesem Fall liefert beispielsweise die Schnittpunktprüfung der Trajektorien keinen Schnittpunkt.

Als weitere Ausführungsform kann das Steuergerät 11 bei Erkennung einer zukünftigen Kollision des Einparkvorgangs eine korrigierte Trajektorie T1 für das Fahrzeug 12 berechnen, wobei der Einparkvorgang anhand der korrigierten Trajektorie T1 fortgesetzt wird. Die korrigierte Trajektorie T1 kann vor und/oder nach einer Verzögerung des Einparkvorgangs berechnet werden; der Einparkvorgang kann auch anhand der korrigierten Trajektorie T1 ohne eine Verzögerung des Einparkvorgangs fortgesetzt werden.

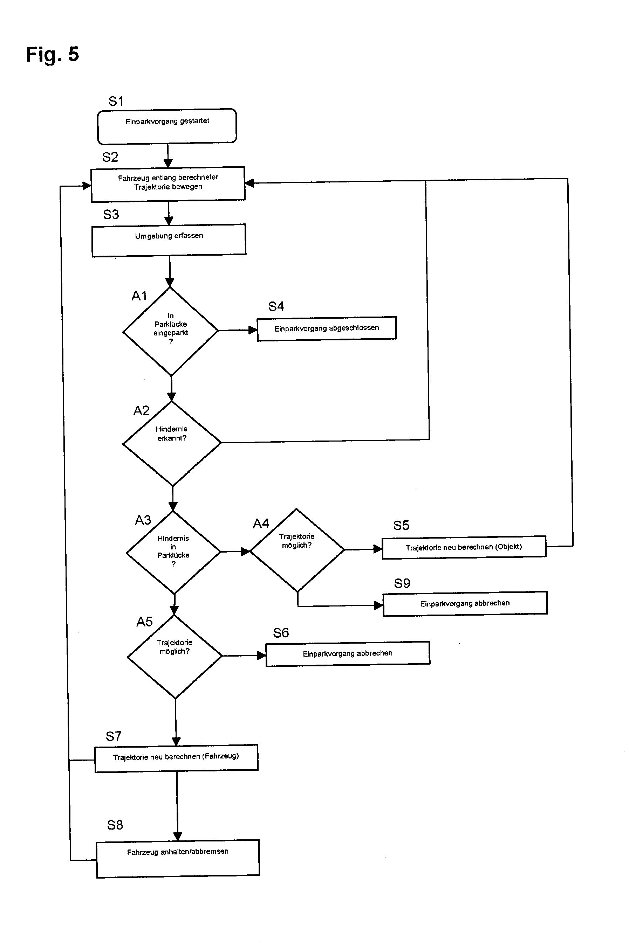

Das in Figur 5 dargestellte Flussdiagramm zeigt eine mögliche Ausführungsform des erfindungsgemäßen Verfahrens.

Das Steuergerät 11 detektiert anhand von Sensordaten der ersten Sensoren 14(1), 14(2), ... 14(n) Objekte im Umfeld des Fahrzeugs 12 und erkennt Parklücken als parkbar, wobei mindestens eine Trajektorie T für einen möglichen Einparkvorgang berechnet wird. In Schritt S1 wird ein Einparkvorgang in eine parkbare Parklücke mittels eines Assistenzsystem des Fahrzeugs 12 gestartet.

In einem weiteren Schritt S2 wird das Fahrzeug 12 entlang der berechneten Trajektorie T bewegt. Anhand der zweiten Sensoren 20(1), 20(2), ... 20(m) wird die Umgebung des Fahrzeugs 12 erfasst. In einem Schritt A1 wird geprüft, ob das Fahrzeug 12 bereits in die Parklücke eingeparkt ist. Ist dies der Fall, ist der Einparkvorgang in Schritt S4 abgeschlossen, zusätzlich kann beispielsweise ein Hinweis an einen Fahrer des Fahrzeugs 12 ergehen.

Ist das Fahrzeug 12 noch nicht vollständig eingeparkt, prüft das Steuergerät 11 in einem Schritt A2 ob ein Hindernis erkannt wurde. Ist dies nicht der Fall, wird der Einparkvorgang entlang der Trajektorie T in Schritt S2 fortgesetzt.

Wurde im Schritt A2 ein Hindernis erkannt, wird in einem weiteren Schritt A3 geprüft, ob ein Objekt detektiert wurde. Wird das Objekt anhand von Sensordaten der ersten Sensoren 14(1), 14(2), ... 14(n) erkannt, beispielsweise ein Objekt in der Parklücke, wird im Schritt A4 geprüft ob eine korrigierte Trajektorie möglich ist. Ist ein Einparkvorgang anhand der korrigierten Trajektorie möglich, wird diese in Schritt S5 berechnet, ansonsten wird der Einparkvorgang in Schritt S9 beendet.

Wird das Objekt von den zweiten Sensoren 20(1), 20(2), ... 20(m) erkannt, wird geprüft, ob es sich um ein bewegtes Objekt handelt, beispielsweise ein überholendes Fahrzeug. In Schritt A5 wird geprüft, ob ein Einparkvorgang möglich ist, ansonsten wird der Einparkvorgang in Schritt S6 beendet. Ist ein Einparkvorgang möglich, wird in Schritt S7 eine korrigierte Trajektorie T1 berechnet.

Der Einparkvorgang des Fahrzeugs 12 kann anhand der in Schritt S7 berechneten korrigierten Trajektorie T1 in Schritt S2 fortgesetzt werde. In einer alternativen Ausführungsform wird der Einparkvorgang durch Reduzierung einer Geschwindigkeit des Fahrzeugs 12 in Schritt S8 solange und/oder stark verzögert, bis eine zukünftige mögliche Kollision des Fahrzeugs 12 mit dem weiteren Fahrzeug 10 ausgeschlossen wird.

In einer weiteren Ausführungsform kann Schritt S8 auch vor Schritt S5 durchgeführt werden. Dadurch wird zunächst der Einparkvorgang anhand der Trajektorie T verzögert und anschließend ggf. eine korrigierte Trajektorie T1 berechnet.

## Patentansprüche

1. Verfahren für ein Assistenzsystem eines Fahrzeugs (12) mit mindestens einem ersten Sensor (14) und mindestens einem zweiten Sensor (20), wobei mittels des ersten Sensors Abstände zu Objekten im Umfeld des Fahrzeugs (12) ermittelt werden, wobei ein Steuergerät (11) aus den ermittelten Abständen zu Objekten im Umfeld des Fahrzeugs eine Trajektorie (T) für einen möglichen Einparkvorgang des Fahrzeugs (12) berechnet, wobei mittels des zweiten Sensors (20) ein seitlicher Bereich des Fahrzeugs (12) auf ein weiteres Fahrzeug überwacht wird, wobei bei Erkennung eines weiteren Fahrzeugs (10) durch den zweiten Sensor (20) eine prognostizierte Trajektorie (Tp) des weiteren Fahrzeugs (10) berechnet wird, das Steuergerät (11) anhand eines Vergleichs der Trajektorie (T) und der prognostizierten Trajektorie (Tp) eine mögliche zukünftige Kollision des weiteren Fahrzeugs (10) mit dem Fahrzeug (12) erkennt und bei Erkennung der möglichen zukünftigen Kollision den Einparkvorgang entlang der Trajektorie (T) verzögert, **dadurch gekennzeichnet, dass** das Steuergerät (11) bei Erkennung einer zukünftigen Kollision eine korrigierte Trajektorie (T1) für das Fahrzeug (10) berechnet, wobei der Einparkvorgang anhand der korrigierten Trajektorie (T1) fortgesetzt wird und wobei
eine positionsabhängige Speicherung der korrigierten Trajektorie (T1) durchgeführt wird, wobei bei erneuten Einparkvorgängen des Fahrzeugs (12) im Umfeld einer gespeicherten Position eine Trajektorie (T) unter Einbeziehung der korrigierten Trajektorie (T1) mit dem geringeren Ausschwenken des Fahrzeugs (12) durch das Steuergerät (11) berechnet wird.

2. Verfahren nach Anspruch 1, **dadurch gekennzeichnet, dass** nach der Erkennung eines weiteren Fahrzeugs (10) durch den zweiten Sensor (20) zunächst durch das Steuergerät (11) ermittelt wird, ob es sich um ein bewegtes Fahrzeug handelt, wobei nur bei einem bewegten weiteren Fahrzeug (10) eine prognostizierte Trajektorie (Tp) berechnet wird.

3. Verfahren nach einem der vorhergehenden Ansprüche, **dadurch gekennzeichnet, dass** das Steuergerät (11) für den Vergleich der Trajektorie (T) und der prognostizierten Trajektorie (Tp) zur Erkennung der möglichen zukünftigen Kollision eine Schnittpunktprüfung der Trajektorien durchführt.

4. Verfahren nach einem der vorhergehenden Ansprüche, **dadurch gekennzeichnet, dass** der Einparkvorgang durch Reduzierung einer Geschwindigkeit des Fahrzeugs (12) so lange und/oder so stark verzögert wird, bis eine zukünftige Kollision des Fahrzeugs (12) mit dem weiteren Fahrzeug (10) durch das Steuergerät (11) ausgeschlossen wird.

5. Assistenzsystem eines Fahrzeugs (12) mit mindestens einem ersten Sensor (14) und mindestens einem zweiten Sensor (20), wobei mittels des ersten Sensors Abstände zu Objekten im Umfeld des Fahrzeugs (12) ermittelt werden, wobei ein Steuergerät (11) aus den ermittelten Abständen zu Objekten im Umfeld des Fahrzeugs eine Trajektorie (T) für einen möglichen Einparkvorgang des Fahrzeugs (12) berechnet, wobei mittels des zweiten Sensors (20) ein seitlicher Bereich des Fahrzeugs (12) auf ein weiteres Fahrzeug überwacht wird, wobei bei Erkennung eines weiteren Fahrzeugs (10) durch den zweiten Sensor (20), eine prognostizierte Trajektorie (Tp) des weiteren Fahrzeugs (10) berechnet wird, das Steuergerät (11) anhand eines Vergleichs der Trajektorie (T) und der prognostizierten Trajektorie (Tp) eine mögliche zukünftige Kollision des Fahrzeugs (12) mit dem weiteren Fahrzeug (10) erkennt und bei Erkennung der möglichen zukünftigen Kollision den Einparkvorgang entlang der Trajektorie (T) verzögert, **dadurch gekennzeichnet, dass** das Steuergerät (11) bei Erkennung einer zukünftigen Kollision eine korrigierte Trajektorie (T1) für das Fahrzeug (10) berechnet, wobei der Einparkvorgang anhand der korrigierten Trajektorie (T1) fortgesetzt wird und wobei eine positionsabhängige Speicherung der korrigierten Trajektorie (T1) durchgeführt wird, wobei bei erneuten Einparkvorgängen des Fahrzeugs (12) im Umfeld einer gespeicherten Position eine Trajektorie (T) unter Einbeziehung der korrigierten Trajektorie (T1) mit dem geringeren Ausschwenken des Fahrzeugs (12) durch das Steuergerät (11) berechnet wird.

6. Vorrichtung nach Anspruch 5, **dadurch gekennzeichnet, dass** der erste Sensor (14) aus mindestens einem Ultraschall-, Radar-, Infrarot-, LIDAR- und/oder einem kapazitiven Sensor und/oder einer Umfeldkamera besteht.

7. Vorrichtung nach einem der vorhergehenden Ansprüche 5 oder 6, **dadurch gekennzeichnet, dass** der zweite Sensor (20) aus mindestens einem Ultraschall-, Radar-, Infrarot-, LIDAR- und/oder einem kapazitiven Sensor und/oder einer Umfeldkamera besteht.

8. Vorrichtung nach einem der vorhergehenden Ansprüche 5 bis 7, **dadurch gekennzeichnet, dass** der erste Sensor (14) und der zweite Sensor (20) eine bauliche Einheit bilden.

9. Vorrichtung nach einem der vorhergehenden Ansprüche 5 bis 8, **dadurch gekennzeichnet, dass** der zweite Sensor (20) in und/oder unter einem Frontstoßfänger, Heckstoßfänger des Fahrzeugs (12), in und/oder an einem Außenspiegel des Fahrzeugs (12), in und/oder an einer Befestigungsvorrichtung eines Außenspiegels des Fahrzeugs (12) angebracht ist.

10. Verwendung eines Verfahrens nach einem der vorhergehenden Ansprüche 1 bis 4 für ein Assistenzsystem zur Erkennung von Objekten im Toten-Winkel eines Fahrzeugs.

11. Computerprogramm mit Programmcodemitteln, um alle Schritte eines Verfahrens nach einem der Ansprüche 1 bis 4 durchzuführen, wenn das Computerprogramm auf einem Computer oder einer entsprechenden Recheneinheit ausgeführt wird.

12. Computerprogrammprodukt mit Programmcodemitteln, die auf einem computerlesbaren Datenträger gespeichert sind, um alle Schritte eines Verfahrens nach einem der Ansprüche 1 bis 4 durchzuführen, wenn ein Computerprogramm nach Anspruch 11 auf einem Computer oder einer entsprechenden Recheneinheit ausgeführt wird.

## Claims

1. Method for an assistance system of a vehicle (12) having at least a first sensor (14) and at least a second sensor (20), wherein distances from objects in the surroundings of the vehicle (12) are determined by means of the first sensor, wherein a control unit (11) calculates a trajectory (T) for a possible parking process of the vehicle (12) on the basis of the determined distances from objects in the surroundings of the vehicle, wherein a lateral region of the vehicle (12) is monitored for a further vehicle by means of the second sensor (20), wherein, when a further vehicle (10) is detected by the second sensor (20), a predicted trajectory (Tp) of the further vehicle (10) is calculated and the control unit (11) detects a possible future collision of the further vehicle (10) with the vehicle (12) by means of a comparison of the trajectory (T) and of the predicted trajectory (Tp), and when the possible future collision is detected, decelerates the parking process along the trajectory (T), **characterized in that**, when a future collision is detected, the control unit (11) calculates a corrected trajectory (T1) for the vehicle (10), wherein the parking process is continued by means of the corrected trajectory (T1), and wherein position-dependent storage of the corrected trajectory (T1) is carried out, wherein, in the case of new parking processes of the vehicle (12) in the surroundings of a stored position a trajectory (T) is calculated by the control unit (11) using the corrected trajectory (T1) with the smaller degree of swinging out of the vehicle (12).

2. Method according to Claim 1, **characterized in that**, after the detection of a further vehicle (10) by the second sensor (20), the control unit (11) firstly determines whether it is a case of a moving vehicle, wherein a predicted trajectory (Tp) is calculated only in the case of a moving further vehicle (10).

3. Method according to one of the preceding claims, **characterized in that** the control unit (11) carries out intersection testing of the trajectories for the comparison of the trajectory (T) and the predicted trajectory (Tp) in order to detect the possible future collision.

4. Method according to one of the preceding claims, **characterized in that** the parking process is decelerated by reducing a speed of the vehicle (12) for a period of time and/or with such intensity that a future collision of the vehicle (12) with the further vehicle (10) is prevented by the control unit (11).

5. Assistance system of a vehicle (12) having at least a first sensor (14) and at least a second sensor (20), wherein distances from objects in the surroundings of the vehicle (12) are determined by means of the first sensor, wherein a control unit (11) calculates a trajectory (T) for a possible parking process of the vehicle (12) on the basis of the determined distances from objects in the surroundings of the vehicle, wherein a lateral region of the vehicle (12) is monitored for a further vehicle by means of the second sensor (20), wherein, when a further vehicle (10) is detected by the second sensor (20), a predicted trajectory (Tp) of the further vehicle (10) is calculated, the control unit (11) detects a possible future collision of the vehicle (12) with the further vehicle (10) by means of a comparison of the trajectory (T) and of the predicted trajectory (Tp), and when the possible future collision is detected, decelerates the parking process along the trajectory (T), **characterized in that**, when a future collision is detected, the control unit (11) calculates a corrected trajectory (T1) for the vehicle (10), wherein the parking process is continued by means of the corrected trajectory (T1) and wherein position-dependent storage of the corrected trajectory (T1) is carried out, wherein in the case of new parking processes of the vehicle (12) in the surroundings of a stored position, a trajectory (T) is calculated by the control unit (11) using the corrected trajectory (T1) with the smaller degree of swinging out of the vehicle (12).

6. Device according to Claim 5, **characterized in that** the first sensor (14) is composed of at least one ultrasonic sensor, radar sensor, infrared sensor, LIDAR sensor and/or a capacitive sensor and/or a surroundings camera.

7. Device according to one of the preceding Claims 5 or 6, **characterized in that** the second sensor (20) is composed of at least one ultrasonic sensor, radar sensor, infrared sensor, LIDAR sensor and/or a capacitive sensor and/or a surroundings camera.

8. Device according to one of the preceding Claims 5 to 7, **characterized in that** the first sensor (14) and the second sensor (20) form one structural unit.

9. Device according to one of the preceding Claims 5 to 8, **characterized in that** the second sensor (20) is mounted in and/or under a front bumper, rear bumper of the vehicle (12), in and/or on an exterior rear view mirror of the vehicle (12), in and/or on an attachment device of an exterior rear view mirror of the vehicle (12).

10. Use of a vehicle according to one of the preceding Claims 1 to 4 for an assistance system for detecting objects in the blind spot of a vehicle.

11. Computer program with program code means for carrying out all the steps of a method according to one of Claims 1 to 4 when the computer program is executed on a computer or a corresponding computing unit.

12. Computer program product with program code means which are stored on a computer-readable data carrier in order to carry out all the steps of a method according to one of Claims 1 to 4 when a computer program according to Claim 11 is executed on a computer or a corresponding computing unit.

## Revendications

1. Procédé pour un système d'assistance d'un véhicule (12) comprenant au moins un premier capteur (14) et au moins un deuxième capteur (20), des distances par rapport à des objets dans l'environnement du véhicule (12) étant déterminées à l'aide du premier capteur, un contrôleur (11) calculant à partir des distances déterminées par rapport aux objets dans l'environnement du véhicule une trajectoire (T) pour une manoeuvre d'entrée en stationnement possible du véhicule (12), une zone latérale du véhicule (12) étant surveillée à l'aide du deuxième capteur (20) en vue de la présence d'un véhicule supplémentaire, en cas de détection d'un véhicule supplémentaire (10) par le deuxième capteur (20), une trajectoire prévisionnelle (Tp) du véhicule supplémentaire (10) étant calculée, le contrôleur identifiant une future collision possible du véhicule supplémentaire (10) avec le véhicule (12) au moyen d'une comparaison de la trajectoire (T) et de la trajectoire prévisionnelle (Tp) et, en cas d'identification de la future collision possible, retarde la manoeuvre d'entrée en stationnement le long de la trajectoire (T), **caractérisé en ce que** le contrôleur (11), en cas d'identification d'une future collision, calcule une trajectoire corrigée (T1) pour le véhicule (10), la manoeuvre d'entrée en stationnement étant poursuivie à l'aide de la trajectoire corrigée (T1) et une mise en mémoire dépendante de la position de la trajectoire corrigée (T1) étant effectuée, une trajectoire (T) étant calculée par le contrôleur (11) dans l'environnement d'une position mise en mémoire lors des nouvelles manoeuvres d'entrée en stationnement du véhicule (12) en intégrant la trajectoire corrigée (T1) avec le plus faible pivotement du véhicule (12).

2. Procédé selon la revendication 1, **caractérisé en ce qu'**après la détection d'un véhicule supplémentaire (10) par le deuxième capteur (20), le contrôleur (11) détermine tout d'abord s'il s'agit d'un véhicule en mouvement, une trajectoire prévisionnelle (Tp) n'étant calculée qu'en présence d'un véhicule supplémentaire (10) en mouvement.

3. Procédé selon l'une des revendications précédentes, **caractérisé en ce que** pour la comparaison de la trajectoire (T) et de la trajectoire prévisionnelle (Tp) en vue d'identifier la future collision possible, le contrôleur (11) effectue un suivi du point d'intersection des trajectoires.

4. Procédé selon l'une des revendications précédentes, **caractérisé en ce que** la manoeuvre d'entrée en stationnement est retardée en réduisant une vitesse du véhicule (12) aussi longtemps et/ou aussi fortement jusqu'à ce qu'une future collision du véhicule (12) avec le véhicule supplémentaire (10) soit exclue par le contrôleur (11).

5. Système d'assistance d'un véhicule (12) comprenant au moins un premier capteur (14) et au moins un deuxième capteur (20), des distances par rapport à des objets dans l'environnement du véhicule (12) étant déterminées à l'aide du premier capteur, un contrôleur (11) calculant à partir des distances déterminées par rapport aux objets dans l'environnement du véhicule une trajectoire (T) pour une manoeuvre d'entrée en stationnement possible du véhicule (12), une zone latérale du véhicule (12) étant surveillée à l'aide du deuxième capteur (20) en vue de la présence d'un véhicule supplémentaire, en cas de détection d'un véhicule supplémentaire (10) par le deuxième capteur (20), une trajectoire prévisionnelle (Tp) du véhicule supplémentaire (10) étant calculée, le contrôleur (11) identifiant une future collision possible du véhicule (12) avec le véhicule supplémentaire (10) au moyen d'une comparaison de la trajectoire (T) et de la trajectoire prévisionnelle (Tp) et, en cas d'identification de la future collision possible, retarde la manoeuvre d'entrée en stationnement le long de la trajectoire (T), **caractérisé en ce que** le contrôleur (11), en cas d'identification d'une future collision, calcule une trajectoire corrigée (T1) pour le véhicule (10), la manoeuvre d'entrée en stationnement étant poursuivie à l'aide de la trajectoire corrigée (T1) et une mise en mémoire dépendante de la position de la trajectoire corrigée (T1) étant effectuée, une trajectoire (T) étant calculée par le contrôleur (11) dans l'environnement d'une position mise en mémoire lors des nouvelles manoeuvres d'entrée en stationnement du véhicule (12) en intégrant la trajectoire corrigée (T1) avec le plus faible pivotement du véhicule (12).

6. Dispositif selon la revendication 5, **caractérisé en ce que** le premier capteur (14) se compose au moins d'un capteur à ultrasons, radar, à infrarouges, LIDAR et/ou capacitif et/ou d'une caméra d'environnement.

7. Dispositif selon l'une des revendications précédentes 5 ou 6, **caractérisé en ce que** le deuxième capteur (20) se compose au moins d'un capteur à ultrasons, radar, à infrarouges, LIDAR et/ou capacitif et/ou d'une caméra d'environnement.

8. Dispositif selon l'une des revendications précédentes 5 à 7, **caractérisé en ce que** le premier capteur (14) et le deuxième capteur (20) forment une unité structurale.

9. Dispositif selon l'une des revendications précédentes 5 à 8, **caractérisé en ce que** le deuxième capteur (20) est monté dans et/ou sous un pare-chocs avant, un pare-chocs arrière du véhicule (12), dans et/ou sur un rétroviseur extérieur du véhicule (12), dans et/ou sur un dispositif de fixation d'un rétroviseur extérieur du véhicule (12).

10. Utilisation d'un procédé selon l'une des revendications précédentes 1 à 4 pour un système d'assistance en vue de la détection d'objets dans l'angle mort d'un véhicule.

11. Programme informatique comprenant des moyens de code de programme pour exécuter toutes les étapes d'un procédé selon l'une des revendications précédentes 1 à 4 lorsque le programme informatique est exécuté sur un ordinateur ou sur une unité de calcul correspondante.

12. Produit programme informatique comprenant des moyens de code de programme qui sont enregistrés sur un support de données lisible par ordinateur pour exécuter toutes les étapes d'un procédé selon l'une des revendications précédentes 1 à 4 lorsqu'un programme informatique selon la revendication 11 est exécuté sur un ordinateur ou sur une unité de calcul correspondante.
